# EUROPEAN PATENT SPECIFICATION

(11) **EP 3 066 340 B1**
(45) Date of publication and mention of the grant of the patent: **13.05.2020**
(21) Application number: 14796878.8
(22) Date of filing: 10.11.2014
(51) Int. Cl.: F03G 6/06

(54) **SYSTEM FOR STEAM POWER GENERATION FROM SOLAR RADIATION**
SYSTEM ZUR DAMPFENERGIEERZEUGUNG AUS SONNENSTRAHLUNG
SYSTÈME DE GÉNÉRATION THERMIQUE À VAPEUR UTILISANT LE RAYONNEMENT SOLAIRE

(30) Priority: 08.11.2013 GB 201319710
(43) Date of publication of application: 14.09.2016
(73) Proprietor: Solar Steam Limited, Bourne, Lincolnshire PE10 0FF (GB)
(72) Inventor: BOYLE, David Hugo, Lytham St Annes Fylde FY8 2QL (GB); PERINI, Simone, Bourne Lincolnshire PE10OFF (GB)
(74) Representative: Morris, Jonathan Paul
(86) International application number: PCT/GB2014/053331
(87) International publication number: WO 2015/067966

(56) References cited:
- EP-A2- 0 216 562
- WO-A2-2011/089437
- CN-A- 103 115 441
- DE-A1- 19 614 787
- FR-A1- 2 423 730
- US-A- 4 299 201
- US-A- 5 632 147
- US-A1- 2012 192 562

## Description

### TECHNICAL FIELD

The present invention relates to a system for steam power generation from solar radiation. Particularly the system involves focusing, via a Fresnel lens, sunlight onto an absorber that is configured to generate steam from water passing therethrough, ultimately for use in the generation of electrical power.

### BACKGROUND TO THE INVENTION

The utilisation of thermal radiation from the sun, referred to herein as solar radiation, for heating water in a tube for the purposes of producing steam and, subsequently, electrical power is generally known. For example, WO2010097637 (Boyle) discloses an apparatus with a Fresnel lens mounted on a frame for selectively directing solar radiation onto a thermosensitive member and a generator means for converting the resulting thermal expansion/contraction into electrical power. While expansion/contraction of the thermosensitive member is the main drive means for the generator, this document also describes an embodiment where sunlight is focussed through an array of Fresnel lenses onto a tube carrying water for the purposes of producing steam capable of powering an electrical generator, and also for utilisation as a desalination process.

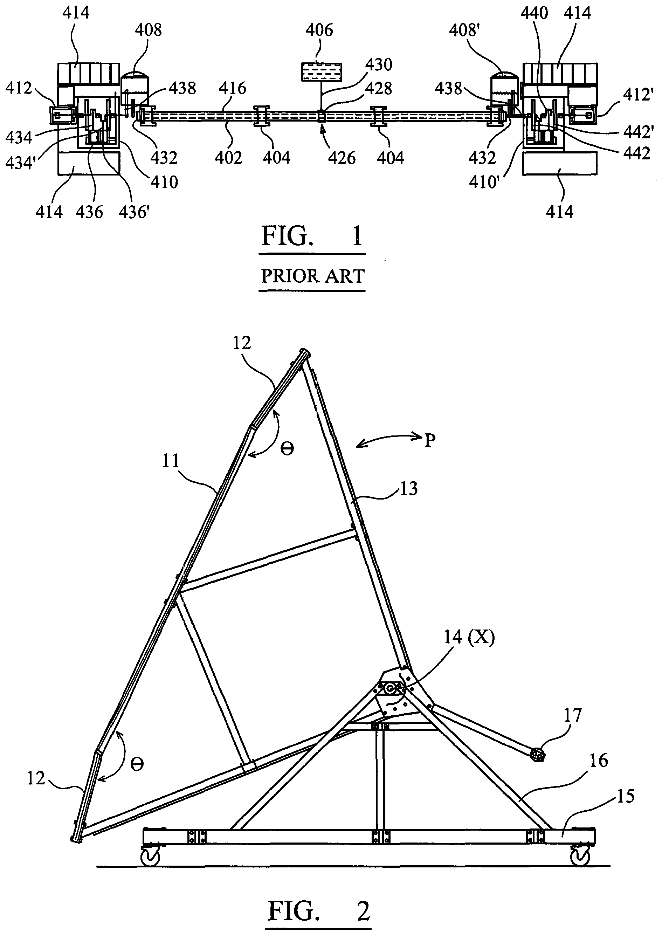

A pictorial representation of the proposed system apparatus is provided as Figure 1 in the attached drawings.

In particular, the prior art embodiment of Figure 1 describes a rod 402, a water source 406, a pair of steam accumulators 408, 408', a pair of steam "engine rooms" 410, 410', a corresponding motor 412, 412' and a plurality of condensing areas 414. The rod 402 is supported by a frame and, in turn, is used as a pivot axis for a Fresnel lens (not seen) with a focal line centred on the rod. Water is injected into the rod 402 at a central location such that, by the time it reaches the respective ends of rod 402, it has turned to steam for collection by the steam accumulators 408/408' whereupon the high pressure is used for power generation.

WO01/88444 (Szyrkowiec) also discloses solar power collection via an optical element placed transverse to the sun's rays, concentrating the rays into a linear focus. At the length of the focus is a heat receiver used to transmit thermal energy to a heated medium to travel through a circulation system. This system induces the sun's rays through two planes and through one rotating axis.

An known arrangement for concentrating and capturing solar radiation is disclosed in FR2423730.

### SUMMARY OF THE INVENTION

The present invention seeks to improve upon the basic principles outlined in the prior art for the purposes of producing a system for electrical power generation from solar radiation.

In one broad aspect of the invention there is provided a Fresnel lens array according to claim 1. In one form the array is incorporated into a system including: an absorber member adapted to carry fluid and located at a focal point of the Fresnel lens, a means for injecting water into the absorber member, and an extraction means, such as a generator, driven by high pressure from the resultant steam produced in the absorber member, which may be tubular or any geometrical shape.

Preferably the water is supplied from a header tank, fed through a de-ionizer, and subsequently pumped into the absorber member.

The Fresnel lens is comprised of at least two linear Fresnel lenses, i.e. an inner lens and outer lens wherein a plane of the outer lens is angled from a plane of the inner lens. Preferably, the angle is between 5-20 degrees, most preferably 10 degrees. It has been found that the efficiency of a combined Fresnel lens according to the invention is greatly increased by the angled nature between the inner and outer lens, in relation to the radiation focused on the absorber member. The inner Fresnel lens at least is capable of focusing thermal energy to a focal line coinciding with the absorber member.

There may be additional Fresnel lenses, either produced from the same or a different mould. The lenses may provide different refractive properties from each other. In a preferred form of the invention there are three lens types; two inner coplanar lenses and a third outer lens which plane is angled from the first lenses.

The Fresnel lens array is mounted on a frame with a pivot point approximately coaxial with a centreline of the absorber member. Such a frame enables the Fresnel lens (at least the inner Fresnel lens) to be angled at the sun in the sky at approximately 90 degrees. Furthermore, the frame is mounted such that it is rotatable about an axis perpendicular to the absorber member centreline. In other words, the frame may be mounted on a turntable or carriage such that the Fresnel lens can follow the sun through its traverse of the sky in daylight hours.

The absorber member should be designed to transfer thermal energy to the injected water as efficiently as possible. This is preferably achieved by use a helical or "rifled" inner surface. A rifled bore presents a greater surface area for contact with the water or vapour within the absorber member. Other configurations can be considered, such as a length of injection tube within the absorber member, featuring small holes on its surface through which water is forced/sprayed.

Further means of improving efficiency and the utilisation of available solar radiation include a reflector surface installed around the absorber member, opposite from the Fresnel lens. Such a reflector surface assists the retention of heat in the absorber member and is a means to collect and redirect any stray light. An example of a suitable reflector is a partially transparent tube surrounding the water-carrying absorber member, wherein a reflective surface is applied to approximately half of the inside of the tube, on the opposite side of the absorber member relative to the Fresnel lens. A half transparent / half internally reflective tube has the property of allowing light from the Fresnel lens to pass through it, while providing some insulation properties for heat radiated from the absorber member itself.

Steam generated from the system, as well as being used for power generation, can alternatively, or in addition, be used for desalination. In general if water is not used for other purposes (e.g. drinking water) then water from the system is recyclable back to the header tank.

Other forms of water purification may be possible, such as in a stage of waste treatment. However, such systems must account for the need to remove particles (salt or other waste) from the absorber member left behind as water is evaporated.

Variations on the system may require the absorber member to be mounted vertically or on an incline where particles from the water are partially removed by gravity to a collection means. Alternatively an auger screw could me mounted in the tube to urge particles toward an end for collection.

### BRIEF DESCRIPTION OF THE DRAWINGS

Figure 1 illustrates a view of a prior art system relating to the present invention;
Figures 2-4 illustrate general side, front and plan elevation views of a system for electrical power generation from solar radiation according to the present invention;
Figure 5 illustrates a detailed view of one embodiment of absorber member;
Figure 6 illustrates a general view of a rifled absorber member for use with the present invention;
Figure 7 illustrates a detailed view of the rifled absorber member from Figure 6, incorporated into a system for electrical power generation from solar radiation;
Figure 8 illustrates an example of a water circuit for use with the invention;
Figure 9 is an illustrative view of a linear Fresnel lens; and
Figure 10 is a schematic view of a lens arrangement according to the invention.

### DETAILED DESCRIPTION OF THE INVENTION

Figures 2-4 illustrate the main components of a solar array specified for use with a system according to the invention. A first or "inner" Fresnel lens 11 is connected by an angle to a second "outer" Fresnel lens 12 and, according to Figure 2, there are two outlying lenses 12 each angled from the main inner lens 11. The first lens 11 may, in fact, be comprised of multiple lens which make up the inner section. This may be necessary dependent on the scale of the system. By way of example, the Fresnel lens array shown by Figure 2 may be six meters high, such that it is most practical to mould the Fresnel lens as smaller sections mounted as "windows" (e.g. 1m x 0.7m panes, 3mm thick) in a frame, each with different refractive properties, e.g. made up of a thousand different angles visible as lines across the lens sheet. Although the refractive properties of lenses mirrored either side of a focal line defined by an absorber member (14) are the same.

The Fresnel lens arrangement 11/12 is supported by a frame 13 which locates the absorber member 14 at a focal line of the main Fresnel lens 11. According to a preferred form of the invention, absorber member 14 is mounted to a carriage 15 by a suitable frame 16 and it (the absorber member 14) serves as a pivot axis X for the frame 13 and the Fresnel lenses mounted thereto. The lens/frame construction is thus moveable about the pivot in a direction indicated by arrow P.

Preferably the illustrated angle θ is approximately 170 degrees, equivalent to 10 degrees between the planes of the respective Fresnel lenses 11/12. However, it will be apparent that other angles could be incorporated following suitable experimentation regarding the effect on efficiency. The offset angle adjustment could also be calculated so as to enable use of Fresnel lenses with like-refractive properties. The angle of offset effectively adjusts the focal line of a Fresnel lens closer toward absorber member 14.

Also visible in Figure 2 is a counterweight 17 extending from a side of frame 13 opposite to the Fresnel lens. Counterweight 17 simply provides a means of balancing the Fresnel lens about its pivot X to reduce the torque on any pivoting connection, which may be mechanised to enable raising and lowering of the Fresnel lens in an arc about pivot X.

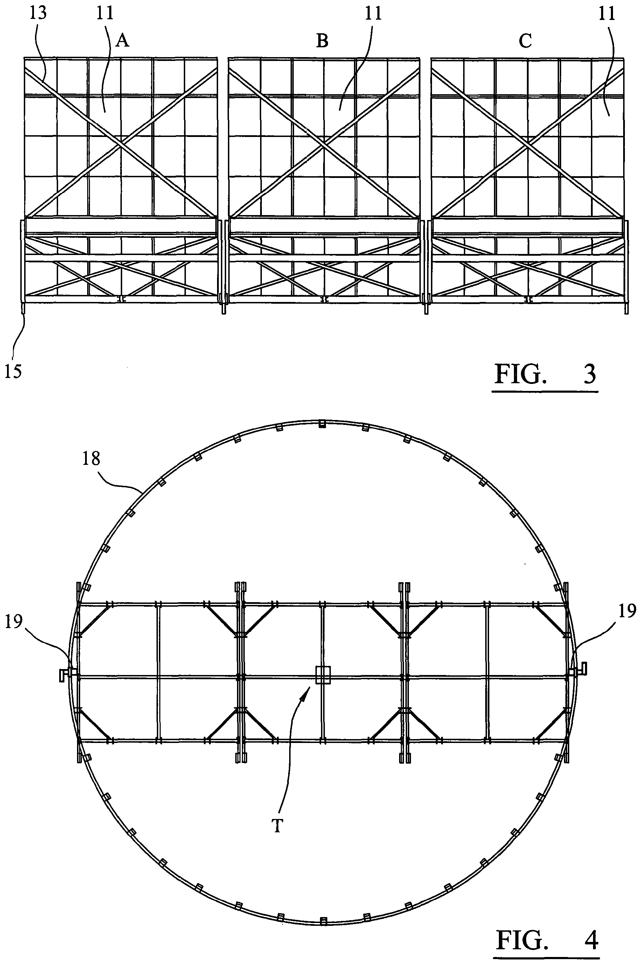

Figures 3 and 4 illustrate a series of three main Fresnel lenses A, B and C placed side-by-side on wheeled carriage 15 such that they can be mounted on a track 18 or turntable (Figure 4) which is rotatable about an axis T perpendicular to the elongate absorber member 14. A wheel or guide 19 running in the track 18 keeps carriage 15 turning in a circular path.

By virtue of the two axes of rotation X/T, the Fresnel lens array may track the movement of the sun during daylight hours in both elevation and from East to West. Tracking could be achieved manually but, most preferably, would be automated by a suitable light sensing tracking system that activates motors to turn the array and raise/lower it throughout the day.

In the known way of solar arrays, direct sun light/heat is focused through lenses 11/12 onto the absorber element 14, increasing its temperature, e.g. to an operating temperature of 300 to 500 degrees Centigrade or more. Any medium passing through the tube will also be subsequently heated.

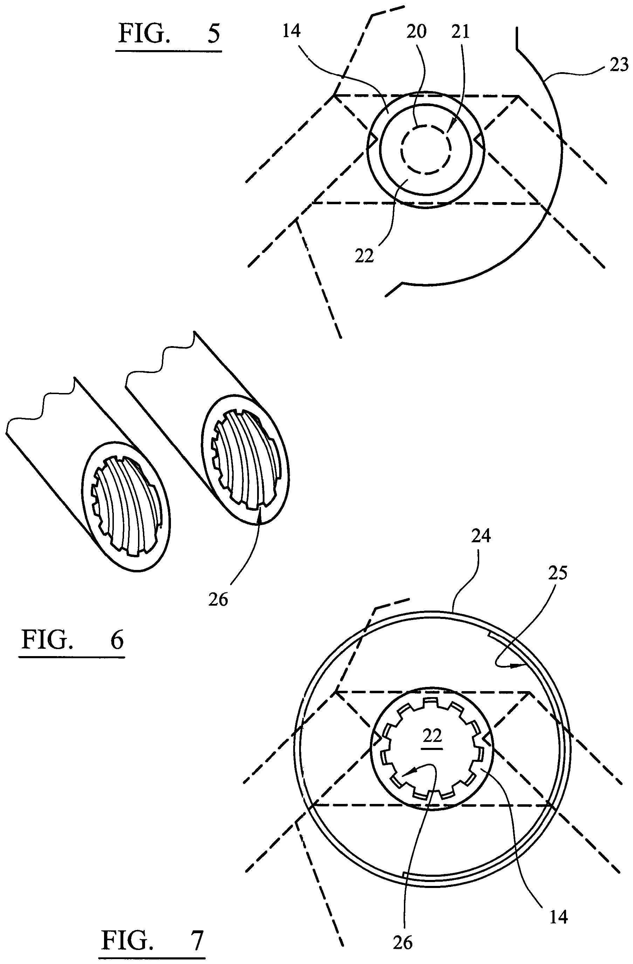

Detail of one embodiment of the absorber element 14 is shown in Figure 5. Specifically, the absorber element 14 is made of a conductive material (e.g. metal) which must withstand the high pressures of steam generated therein. As illustrated, the absorber member further includes a coaxially arranged inner tube 20, incorporating injection holes 21, through which water, in liquid form is able to be forced. Consequently, a spray of water contacts the heated walls of tube 14 and is turned to steam which will pressurise space 22 and, ultimately can be forced out of the tube to drive a turbine for power generation.

Also visible in Figure 5 is a reflector 23 which is in the form of a semi-cylindrical element coaxial with tubes 14/20, providing a reflective surface to direct light and heat energy back upon absorber member 14.

According to a second embodiment illustrated by Figure 7, reflector 23 is substituted (or complimented by) a complete tube 24 surrounding absorber member 14 wherein one side of the tube (facing Fresnel lens 11) is transparent and the opposing side has a reflective coating, depicted in exaggerated fashion by numeral 25. Such a construction allows light to pass through a transparent wall of the tube and will act as insulation against heat radiated from absorber member 14. An example of transparent tube with reflective surface applied thereto is a quartz glass supplied by Heraeus Quarzglas GmbH & Co. KG. Such products are normally used for lighting purposes.

It is desirable to ensure that absorber member 14 is maintained at as high a temperate with as great an efficiency as possible so that steam generation is achieved within the tube. In the preferred form of the absorber member 14 illustrated by Figure 7, this component includes a rifled bore 26 which effectively increases the surface area in contact with introduced water and also provides a more efficient/quicker means of extraction for steam passing along the tube by virtue of a Venturi effect. In a preferred embodiment the absorber member 14 is approximately 5cm in diameter and 13 metres long (hence track 18 is also approximately 13m in diameter), rated for high pressure use (a 10 bar rating or higher). An example of a suitable absorber member is a multi-rifled seamless cold-drawn boiler tube as supplied by ISMT Limited.

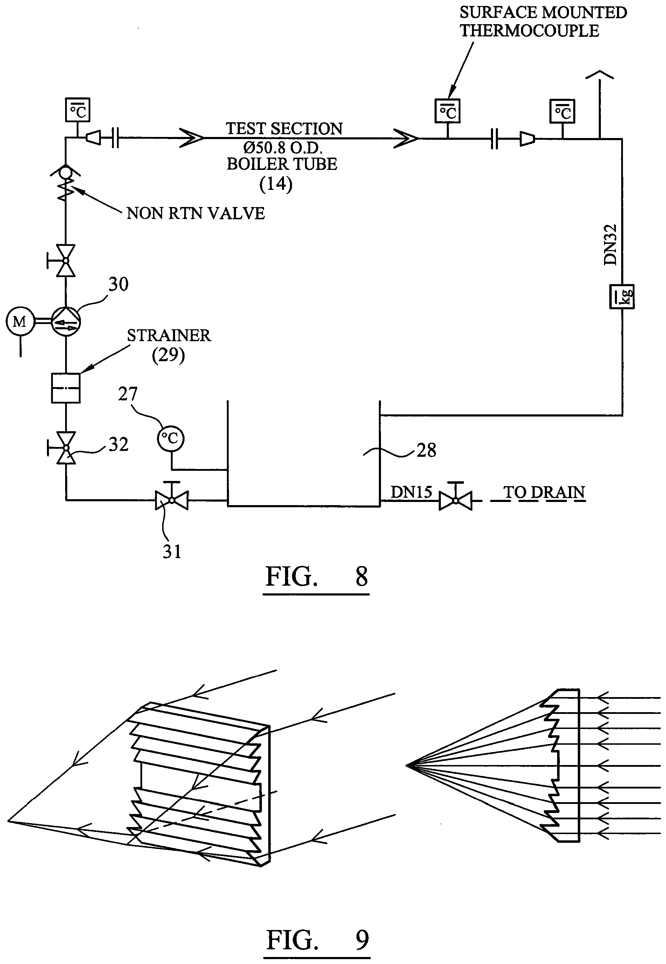

A preferred form of the system will include temperate and pressure gauges to monitor operation at critical points of the system. Furthermore, condensate is able to be returned back to the header tank. A suitable water circuit is illustrated by Figure 8, however, this configuration was devised primarily for testing purposes; i.e. to measure steam generation. It does not incorporate a turbine that utilises the steam pressure for power generation.

With reference to Figure 8, additional air vents may be fitted at any high points in the circuit as required. Likewise, drain points (e.g. DN15) may be fitted at an low points. If a temperature gauge 27 on header tank 28 is not easily visible to an operator, a temperature transmitter can be considered, to be received by a control unit (not seen).

Preferably water is drawn from a low level of the tank 28 by a pump 30, passed through a strainer 29 and ultimately returned via line DN32 to a higher level. Referring to Figure 8, any power generation apparatus would be located downstream of tube 14, e.g. within line DN32. A number of valves 31, 32 may be installed for control of flow through the circuit. Similarly, thermocouples may activate an emergency shut down in the event that operating parameters are exceeded.

Lagging/insulation of pipe work may not be required, particularly since it is desirable that the steam, after power generation, should return to a liquid state before return to header tank 28, or as use for purified drinking water etc.

Unlike the prior art system (Figure 1) it is intended to introduce liquid water at one end of absorber member 14, where it will be turned to steam and pressurised as it travels along rifled bore 26. However, alternative configurations are possible, such as a central or multiple injection points.

Fresnel lens 11 is designed to focus solar radiation onto a line that is substantially coaxial with the absorber member 14 or its wall surface. Figure 9 illustrates an exaggerated view of a linear Fresnel lens. Such a Fresnel lens can be achieved by known design methods, depending on the overall scale of the system. In practice the lens may be comprised from separate components abutted together. For example the upper part of the lens includes the same angles etched/moulded into a sheet as the lower part, but this it is simply reversed. Therefore, the same section can be used for above and below the focus line by simply turning it around.

Likewise, the Fresnel lens located at the outer edges of the array can be a single component designed from circumstantial information. However, the design must accommodate an offset angle between the planes of the respective Fresnel lenses. According to experimental results, an offset angle of between 5-20 degrees between the planes, most preferably 10 degrees achieves an increase in efficiency from approximately 18% (for a flat lens coplanar with the first lens 11) to over 40%.

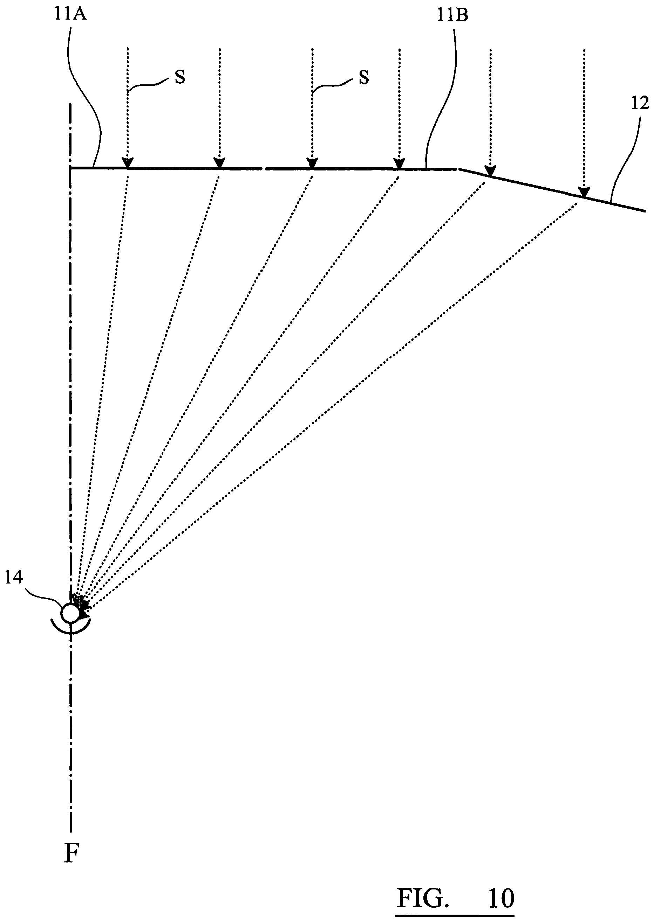

Figure 10 illustrates a solar concentrating lens comprised of two inner linear Fresnel lenses 11A and 11B and an outer lens 12 offset by an angle as previously discussed.

The lens is arranged by a tracking system such that sun rays S strike the first lenses 11A/11B perpendicularly. By virtue of the angles moulded into the Fresnel lens, light/heat is refracted toward a focal point defined by absorber 14.

The material of the lens is three millimetres thick, with each lens being one meter by seventy centimetres in area. In each meter length there are over a thousand angles moulded/cut into the three millimetre thickness, where each angle is different the farther from the apex; i.e. the farther out from the centre line F, the greater the angle. According to this example there are three different moulds producing three different lenses.

It is known that as the angles in a linear Fresnel lens begin to slope outwards they start to interfere and block the previous angle. For example, as illustrated, lens 11A is efficient to 96 per cent of the light on the meter length refracted to the tube 14. By contrast lens 11B with greater angles moulded thereinto is 80% efficient.

If lens 12 were coplanar with lenses 11A/11B it would be expected to be around 10% efficient. However, by introducing an angle, the efficiency of lens 12 increases to around 43%.

As mentioned previously, the lens array illustrated by Figure 10 is situated on a turntable and will be automatically adjusted to follow the sun's movement across the sky throughout the day. Movement is preferably by four wheel assemblies sitting on the track, independently driven and each geared for slow running. The lens will also pivot on its fulcrum which is the steel tube 14 to raise and lower and track the sun throughout the day. This can be achieved by a spiral screw thread or hydraulic rams attached to the base frames and to the lens frame and driven by an electric motor.

Both of these tracking features can be controlled by either an existing mechanism or bespoke to the present invention. Preferably all aspects will be computer controlled for automation, not requiring direct input from an operator.

The inventive concept can be implemented otherwise through the use of available materials and manufacturing techniques known in the art.

Compared to known prior art, the present invention is believed to possess the following distinctive attributes:
- Lenses incorporated into a frame design that includes more than one plane/orientation
- The refractive properties of different lens are intended to be different which, in practice, means at least two different lens moulds are required
- The mounting/frame moves through dual axis to track the sun
- The absorber/tubular member includes a rifled bore and is preferably transparent and associated with a reflector member.

## Claims

1. A Fresnel lens array for use in a system for electrical power generation from solar radiation including:
at least two linear Fresnel lens sections (11,12) abutted at respective edges, wherein a plane of one lens is at an offset angle from a plane of the other lens;
an absorber member (14) adapted to carry fluid and located at a focal point of at least one of the Fresnel lenses; and **characterised by**
a frame (16) for mounting the lens array and adapted for pivoting movement about axes substantially coaxial and perpendicular with the absorber member.

2. The Fresnel lens array of claim 1 wherein the offset angle (θ) of the lens planes is between 5-20 degrees.

3. The Fresnel lens array of claim 2 wherein the offset angle (θ) of the lens planes is 10 degrees.

4. The Fresnel lens array of any one of the preceding claims wherein there are two outer lenses (12) connected at opposite edges of an inner lens (11), each with planes angled from the plane of the inner lens (11).

5. A system for electrical power generation from solar radiation, incorporating the Fresnel lens array according to any of claims 1 to 4, including:
a means (20,21) for introducing water into the absorber member (14); and
an extraction means drivable by high pressure from the resultant steam produced in the absorber member (14).

6. The system of claim 5 wherein the absorber member (14) includes a rifled bore (26) therethrough.

7. The system of claim 5 or 6 including a reflector surface (25) located around the absorber member (14), opposite from the Fresnel lens.

8. The system of claim 7 wherein the reflector surface (25) is formed on a transparent tube (24) enclosing the absorber member (14).

9. The system of any one of claims 5 to 8 wherein the lens sections (11,12) have different refractive properties from each other.

10. The system of claim 9 wherein the means for introducing water into the absorber member (14) is a pressurised system, incorporating a pump (30) or header tank (28).

11. The system of claim 9 or 10 wherein the means for introducing water into the absorber member (14) includes a de-ionizer.

12. The system of any preceding claim 9 to 11 incorporated into a desalination plant and/or waste treatment system.

13. The system of claim 10 wherein water from the system, condensed from steam, is recyclable back to the header tank (28).

## Patentansprüche

1. Fresnel-Linsen-Anordnung zur Verwendung in einem System zur Erzeugung elektrischer Energie aus Sonnenstrahlung, umfassend:
mindestens zwei lineare Fresnel-Linsen-Abschnitte (11, 12), die an entsprechenden Kanten anstoßen, wobei eine Ebene einer Linse einen Offsetwinkel von einer Ebene der anderen Linse aufweist;
ein Absorberelement (14), das Fluid führen kann und das sich an einem Brennpunkt mindestens einer der Fresnel-Linsen befindet; und **gekennzeichnet durch**
einen Rahmen (16) zur Anbringung der Linsenanordnung, und wobei sich der Rahmen für eine Drehbewegung um Achsen eignet, die im Wesentlichen koaxial und senkrecht zu dem Absorberelement sind.

2. Fresnel-Linsen-Anordnung nach Anspruch 1, wobei der Offsetwinkel (θ) der Linsenebenen zwischen 5 und 20 Grad liegt.

3. Fresnel-Linsen-Anordnung nach Anspruch 2, wobei der Offsetwinkel (θ) der Linsenebenen 10 Grad beträgt.

4. Fresnel-Linsen-Anordnung nach einem der vorstehenden Ansprüche, wobei zwei äußere Linsen (12) vorgesehen sind, die an gegenüberliegenden Kanten einer inneren Linse (11) verbunden sind, jeweils mit Ebenen, die von der Ebene der inneren Linse (11) angewinkelt sind.

5. System zur Erzeugung elektrischer Energie aus Sonnenstrahlung, welches die Fresnel-Linsen-Anordnung nach einem der Ansprüche 1 bis 4 beinhaltet, umfassend:
ein Mittel (20, 21) zum Einführen von Wasser in das Absorberelement (14); und
ein Extraktionsmittel, das durch hohen Druck von dem in dem Absorberelement (14) erzeugten Dampf angetrieben werden kann.

6. System nach Anspruch 5, wobei das Absorberelement (14) dort hindurch eine gezogene Bohrung (26) aufweist.

7. System nach Anspruch 5 oder 6, mit einer Reflektoroberfläche (25), die gegenüber der Fresnel-Linse um das Absorberelement (14) angeordnet ist.

8. System nach Anspruch 7, wobei die Reflektoroberfläche (25) auf einer transparenten Röhre (24) ausgebildet ist, welche das Absorberelement (14) einschließt.

9. System nach einem der Ansprüche 5 bis 8, wobei die Linsenabschnitte (11, 12) sich voneinander unterscheidende Brechungseigenschaften aufweisen.

10. System nach Anspruch 9, wobei das Mittel zum Einführen von Wasser in das Absorberelement (14) ein Drucksystem ist, das eine Pumpe (30) oder einen oberen Tank (28) umfasst.

11. System nach Anspruch 9 oder 10, wobei das Mittel zum Einführen von Wasser in das Absorberelement (14) einen Deionisator aufweist.

12. System nach einem der Ansprüche 9 bis 11, das in eine Entsalzungsanlage und/oder ein Wasseraufbereitungssystem integriert ist.

13. System nach Anspruch 10, wobei Wasser von dem System, das aus Dampf kondensiert ist, in den oberen Tank (28) zurückgeführt werden kann.

## Revendications

1. Réseau de lentilles de Fresnel destiné à être utilisé dans un système de production d'énergie électrique à partir du rayonnement solaire, comprenant :
au moins deux sections de lentilles de Fresnel (11, 12) linéaires en butée sur des bords respectifs, un plan d'une lentille étant à un angle décalé par rapport à un plan de l'autre lentille ;
un élément absorbant (14) conçu pour transporter un fluide et situé au niveau d'un point focal d'au moins une des lentilles de Fresnel ; et **caractérisé par**
un cadre (16) pour le montage du réseau de lentilles et conçu pour un mouvement de pivotement autour d'axes sensiblement coaxiaux et perpendiculaires à l'élément absorbant.

2. Réseau de lentilles de Fresnel selon la revendication 1, l'angle de décalage (θ) des plans de lentille étant compris entre 5 et 20 degrés.

3. Réseau de lentilles de Fresnel selon la revendication 2, l'angle de décalage (θ) des plans de lentille étant de 10 degrés.

4. Réseau de lentilles de Fresnel selon l'une quelconque des revendications précédentes, deux lentilles extérieures (12) étant reliées aux bords opposés d'une lentille intérieure (11), chacune avec des plans inclinés par rapport au plan de la lentille intérieure (11).

5. Système de production d'énergie électrique à partir du rayonnement solaire, incorporant le réseau de lentilles de Fresnel selon l'une quelconque des revendications 1 à 4, comprenant :
un moyen (20, 21) pour introduire de l'eau dans l'élément absorbant (14) ; et
un moyen d'extraction pouvant être actionné par une pression élevée à partir de la vapeur obtenue produite dans l'élément absorbant (14).

6. Système selon la revendication 5, l'élément absorbant (14) comprenant un alésage rayé (26) au travers.

7. Système selon la revendication 5 ou 6 comprenant une surface réfléchissante (25) située autour de l'élément absorbant (14), à l'opposé de la lentille de Fresnel.

8. Système selon la revendication 7, la surface réfléchissante (25) étant formée sur un tube transparent (24) enfermant l'élément absorbant (14).

9. Système selon l'une quelconque des revendications 5 à 8, les sections de lentille (11, 12) ayant des propriétés de réfraction différentes les unes des autres.

10. Système selon la revendication 9, le moyen d'introduction de l'eau dans l'élément absorbant (14) étant un système sous pression, incorporant une pompe (30) ou un réservoir collecteur (28).

11. Système selon la revendication 9 ou 10, le moyen d'introduction de l'eau dans l'élément absorbant (14) comprenant un dé-ioniseur.

12. Système selon l'une quelconque des revendications précédentes 9 à 11 incorporé dans une usine de dessalement et/ou un système de traitement des déchets.

13. Système selon la revendication 10, l'eau provenant du système, condensée à partir de vapeur, étant recyclable dans le réservoir collecteur (28).
